# FASCICULE DE BREVET EUROPEEN

(11) **EP 2 268 474 B1**
(45) Date de publication et mention de la délivrance du brevet: **29.04.2020**
(21) Numéro de dépôt: 09718753.8
(22) Date de dépôt: 26.01.2009
(51) Int. Cl.: B29C 70/20, B64C 1/06, B29C 70/30, B29C 70/54, B29C 70/50, B29D 99/00, B29L 31/00, B29L 31/30, B64C 1/10, B29C 70/34

(54) **PIÈCE STRUCTURALE COURBE EN MATÉRIAU COMPOSITE ET PROCÉDÉ DE FABRICATION D'UNE TELLE PIÈCE**
AUS VERBUNDWERKSTOFF HERGESTELLTES GEKRÜMMTES STRUKTURTEIL UND VERFAHREN ZUR HERSTELLUNG SOLCH EINES TEILS
CURVED STRUCTURAL PART MADE OF COMPOSITE MATERIAL AND METHOD OF MANUFACTURING SUCH A PART

(30) Priorité: 07.03.2008 FR 0801261; 07.03.2008 FR 0801260
(43) Date de publication de la demande: 05.01.2011
(73) Titulaire: AIRBUS OPERATIONS (S.A.S), 31060 Toulouse (FR); Airbus SAS, 31707 Blagnac (FR)
(72) Inventeur: HELLARD, Nathalie, F-31700 Blagnac (FR); KUBRYK, Vanessa, F-31200 Toulouse (FR); ALBY, Sébastien, F-31170 Tournefeuille (FR); RAULOT, Cécile, F-31700 Blagnac (FR); DUQUEINE, Gilles, F-69270 Fontaines sur Saône (FR); AUBRY, Jérôme, F-38118 Saint Baudille de la Tour (FR)
(74) Mandataire: Gicquel, Olivier Yves Gérard
(86) Numéro de dépôt international: PCT/FR2009/000092
(87) Numéro de publication internationale: WO 2009/112694

(56) Documents cités:
- WO-A-2005/011961
- US-A- 5 292 475
- US-A1- 2007 029 038
- US-A1- 2007 175 573

## Description

### DOMAINE TECHNIQUE

L'invention appartient au domaine des pièces structurales constituées d'un matériau composite à renfort fibreux. Plus particulièrement, l'invention concerne une pièce structurale courbe utilisée, par exemple, pour la constitution d'un raidisseur circonférentiel, ou cadre, d'une structure de coque telle qu'un fuselage d'aéronef.

### ETAT DE L'ART ANTERIEUR

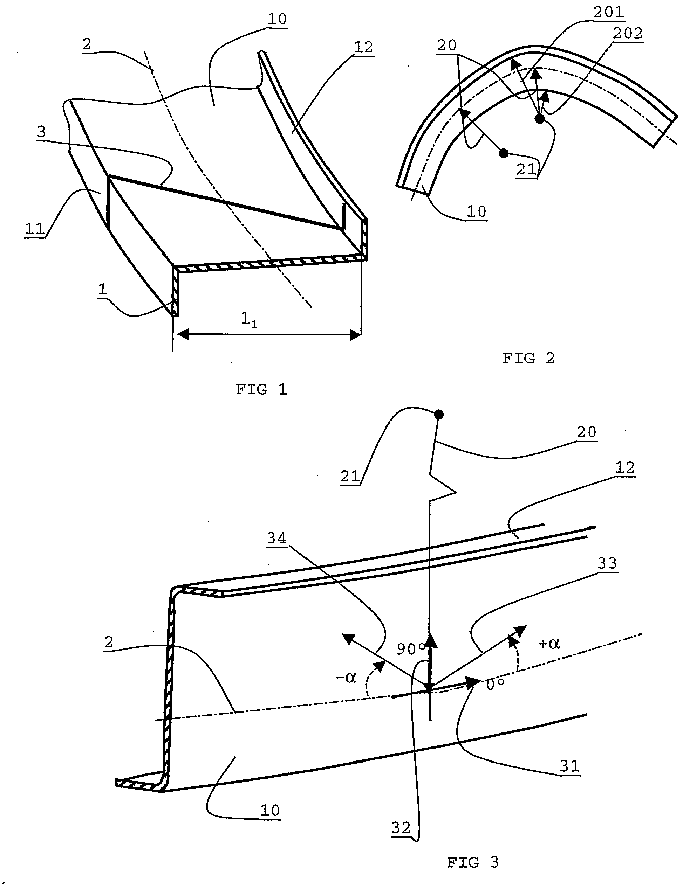

Selon l'art antérieur une telle pièce structurale, ou cadre, figure 1, se présente sous la forme d'un profilé dont la section (1) sensiblement constante peut prendre la forme générale d'un L, d'un U, d'un Z, d'un J ou des formes plus complexes, ladite section s'étendant selon un axe de balayage (2) non rectiligne, sur une longueur supérieure à 10 fois la largeur (l₁). L'axe de balayage (2) est une courbe caractérisée par une succession de rayons de courbure (20), figure 2, associés à leur centre de courbure respectif (21). La section d'un tel profilé comprend au moins deux ailes, au moins l'une des deux (10) présentant une variation de rayon de courbure selon sa largeur (201,202). Typiquement le rayon de courbure moyen (20) est supérieur à 20 fois la largeur. On connait également les documents US 5 292 475 et US 2007/029038 des pièces structurales en composite.

De telles pièces sont couramment utilisées pour constituer l'ossature d'une structure de coque de grande dimension, tel qu'un fuselage d'aéronef.
Selon l'art antérieur une telle structure est essentiellement constituée de matériaux métalliques, tels que des alliages d'aluminium ou de titane.
Dans cette configuration les cadres sont obtenus à partir de profilés extrudés puis mis en forme par déformation plastique par exemple par étirage ou par roulage.
Ces procédés de fabrication sont particulièrement économiques mais ne sont applicables que sur des profilés dont la section est constante sur toute la longueur. Ainsi, la section du profilé est déterminée par sa résistance aux conditions de chargement locales maximales.
Lorsqu'il est nécessaire de réduire la masse d'une tel cadre, alors il est souhaitable que la section soit optimisée localement tant en épaisseur qu'en largeur ou même en forme de manière à tenir compte des différences locales de flux d'effort auxquelles elle est soumise. Dans ces conditions et selon l'art antérieur, il est connu, soit de fabriquer un produit intermédiaire par extrusion et formage plastique, mais de section et / ou d'épaisseur plus importante que la pièce finale, puis, d'usiner par enlèvement de matière ledit produit de manière à adapter localement sa section et son épaisseur. Soit de tailler entièrement la pièce par enlèvement de matière dans une plaque épaisse. Ces procédés d'obtention sont beaucoup moins performants d'un point de vue économique et nécessitent de réduire en copeaux une grande quantité de matière.
Afin de réduire encore la masse des structures il est connu de substituer les pièces structurales constituées de matériaux métalliques par des pièces constituées de matériaux composites à renfort fibreux.
De telles pièces structurales sont obtenues à partir de fibres empilées selon des orientations et une séquence d'empilement définies. Un exemple d'un tel profilé est décrit dans la demande de brevet française FR20070057431 au nom de la demanderesse.
Un tel profilé est obtenu en plaçant une pluralité de couches de fibres sèches d'orientation définie, ou plis, dans un moule ayant la forme de la section et la courbure de la pièce. Puis, les fibres sont noyées dans la résine par transfert ou par infusion de résine. Lorsqu'il s'agit de pièces courbes, un tel procédé d'obtention fait appel à des opérations manuelles pour la dépose des différents plis sur l'outillage. Il s'agit en effet de faire épouser une section courbe, présentant des variations de rayon de courbure selon sa largeur, à des fibres qui ne présentent aucune capacité de déformation plastique et qui ne doivent pas se froisser ou onduler sous peine de faire chuter les caractéristiques mécaniques du produit ainsi obtenu. Les fibres, lors de la dépose des différentes couches, doivent être tendues en permanence en même temps qu'elles sont appliquées contre l'outillage de sorte à épouser sa forme.
Cette opération, consistant à presser et à tendre une préforme fibreuse constituée de fibres continues sur un outillage courbe est désignée classiquement sous le terme « d'épanouissement ».
Cette opération manuelle nécessite une certaine dextérité de la part de l'opérateur et conduit à des coûts de production élevés.
Alternativement de telles pièces structurales peuvent être fabriquées à partir de fibres pré-imprégnées déposées sur l'outillage par placement de fibres, opération qui consiste à réaliser un drapage 3D fil à fil à l'aide d'un robot équipé d'une tête de placement de fibres.
Une telle opération nécessite des machines complexes et ne permet pas d'atteindre des taux de productivité significativement plus élevés que la dépose manuelle évoquée plus haut.
L'un des objets de l'invention est de proposer un procédé de fabrication économique et automatisé d'une telle pièce structurale.
Pour des applications aéronautiques les fibres sont couramment constituées de carbone et la matrice d'une résine thermodurcissable.
Cette constitution confère à ces pièces des caractéristiques mécaniques très élevées en regard de leur section vis à vis des modes de déformation macroscopiques ou primaires du fuselage. En revanche, un tel matériau ne possédant pas d'aptitude à la déformation plastique, celui-ci ne présente qu'une résistance très modérée vis à vis des sollicitations de matage. De telles sollicitations se présentent lorsque qu'il y a transmission d'un flux d'effort entre les surfaces de deux pièces en contact. C'est à dire partout où il y aura assemblage.
Par exemple, compte tenu de la dimension importante des fuselages d'aéronef de transport commerciaux, et aussi pour en faciliter l'assemblage, un élément structural tel qu'un cadre est constitué de plusieurs pièces structurales formant des secteurs de la circonférence dudit fuselage. Ces secteurs sont assemblés par éclissage. Par ailleurs le plancher intérieur est également lié aux cadres, afin que le poids du plancher, des passagers et de la charge commerciale qu'il supporte, soient drainés et se répartissent dans la structure de coque constituant le fuselage. Toutes ces liaisons se font par l'intermédiaire de fixations généralement de type rivet. Une telle liaison doit comporter suffisamment de fixations pour transmettre la charge mécanique qu'elle supporte d'une pièce à l'autre. Et, afin qu'elle résiste à la fatigue et au matage, des règles d'espacement entre les fixations doivent être respectées.
Or, lorsque les cadres sont constitués d'un matériau composite à renfort fibreux la section des pièces nécessaires à la reprise des efforts correspondant aux modes de sollicitation macroscopiques ou primaires de la structure ne permet pas d'installer le nombre de fixations adapté à la reprise des différentes charges aux liaisons, tout en respectant les règles d'espacement desdites fixations. Une solution consiste à utiliser un profilé d'âme plus large, de sorte à pouvoir écarter les fixations. Cette solution, outre le fait d'accroître le poids des pièces réduit l'espace intérieur de la structure de coque, donc le volume disponible à l'intérieur de celle-ci pour la charge commerciale ou l'installation des systèmes. Les solutions selon l'art antérieur consistent à intercaler dans ces liaisons des pièces d'éclissage complexes, généralement métalliques, qui permettent par leur rigidité de répartir la sollicitation de matage sur une plus grande surface. Cependant de telles solutions présentent un coût élevé, sont pénalisantes en termes masse et, du fait de la rigidité élevée des pièces de liaison, conduisent à la transmission dans les structures de sollicitations parasites.
Par ailleurs, la solution consistant à fabriquer une pièce plus large et / ou plus épaisse puis à adapter sa section localement par enlèvement de matière, n'est pas envisageable avec une pièce composite à renfort fibreux continu dans la mesure où une telle solution conduirait à couper les fibres et par suite à ruiner la résistance de la pièce.
Il existe donc un besoin pour des éléments structuraux composites, tels que des raidisseurs circonférentiels de fuselage d'aéronef, ou cadres, dont les diverses liaisons puissent être réalisées sans pièce d'éclissage intermédiaire complexe mais sans que l'élargissement du profilé ne soit préjudiciable au volume disponible pour la charge commerciale à l'intérieur de la structure de coque soutenue par ces cadres.
Il existe également un besoin pour un procédé économique et automatisé adapté à la fabrication de telles pièces.

### EXPOSE DE L'INVENTION

Pour répondre à ces besoins de l'art antérieur l'invention propose une pièce structurale courbe constituée d'un matériau composite à renfort fibreux à fibres continues dont la section comprend au moins deux ailes, lesdites fibres se prolongeant d'une aile à l'autre, ladite pièce structurale comprenant une variation de la largeur de sa section parallèlement au rayon de courbure local. L'élément structural résultant de l'assemblage de pièces selon l'invention comporte donc des élargissements locaux de la section au niveau des liaisons entre les pièces constituant l'élément structural et au niveau de la liaison avec les profilés du plancher dans le cas de l'utilisation d'un tel profilé pour la constitution d'une structure de fuselage d'aéronef. De tels élargissements de la section permettent toutefois d'obtenir une largeur de section adéquate au niveau des liaisons, afin de placer le nombre de fixations approprié en respectant les règles d'espacement entre lesdites fixations sans avoir recours à des pièces d'éclissage complexes. La variation de largeur comprend une réduction de rayon de courbure minimal local de la pièce. Selon cette configuration, la pièce structurale est particulièrement adaptée à la constitution d'une structure de coque dont les raidisseurs circonférentiels se situent à l'intérieur de ladite structure. Ainsi, les variations de largeur n'affectent pas la forme extérieure de la structure de coque, une telle variation de forme serait par exemple préjudiciable à la performance aérodynamique d'un fuselage d'aéronef. Par ailleurs cette variation de la largeur de section pénalise moins le volume intérieur de la structure de coque ainsi que la masse de cette dernière en comparaison des solutions de l'art antérieur consistant à élargir toute la section de la pièce.
Avantageusement la pièce structurale selon l'invention comprend 3 ailes dont les traces se situent dans au moins deux plans sécants, cette configuration correspond à des profilés ayant sensiblement la forme d'un U, d'un Z, ou plus complexes telles qu'un W. Ces sections permettent de stabiliser ledit profilé vis à vis des modes de déformation tels que le flambage ou le déversement.
La variation de largeur comprend un élargissement de section suivi d'un retour à la section nominale. Ainsi seule la zone sollicitée au matage est élargie ce qui permet d'optimiser la masse de la pièce. Selon un premier mode de réalisation de la stratification, la pièce structurale selon l'invention comprend des fibres de renfort continues se prolongeant sur les au moins deux ailes, orientées d'un angle plus ou moins α par rapport à la courbure locale, α étant compris entre 30° et 60°. La présence de ces fibres permet à une telle pièce de structure de résister à des flux d'efforts en traction, compression et flambage et de pouvoir être fabriquées de manière économique par épanouissement d'une préforme fibreuse constituée de fibres sèches ou pré-imprégnées.
Selon un second mode de réalisation de la stratification, la pièce structurale comprend en outre des fibres continues se prolongeant sur les au moins deux ailes et orientées parallèlement au rayon de courbure local. Les fibres selon cette orientation, dite à 90°, peuvent également être épanouies sur l'outillage et renforcent le profilé vis à vis de ses modes de déformation par flambage.
Selon un troisième mode de réalisation de la stratification, la pièce structurale selon l'invention comprend également des fibres de renfort continues orientées perpendiculairement au rayon de courbure, dites fibres à 0°, dans au moins une des ailes. Cette configuration permet de renforcer ladite pièce vis à vis des sollicitations de traction ou compression perpendiculaires au rayon de courbure et permettent notamment de renforcer la structure de coque vis à vis du flambage..
Afin de préserver la continuité des fibres, les variations de section doivent s'effectuer progressivement.
La progresivité du raccordement vise trois objectifs :
- tout d'abord il s'agit d'assurer la continuité des flux d'effort de la structure de largeur courante vers l'élargissement de section et vice versa. C'est à dire que les sollicitations de traction parallèles au rayon de courbure et de cisaillement parallèle à la courbure au niveau de l'élargissement doivent se répartir dans toute la structure de la pièce sans entraîner « l'arrachement » par délaminage de la partie élargie. Ce problème est lié à la nature composite de la pièce qui ne présente pas la même cohésion intrinsèque selon tous les modes de sollicitation au contraire des pièces métalliques,
- par ailleurs, des variations trop brutales de section augmentent les risques d'ondulation des fibres au voisinage des zones où la section évolue. De telles ondulations sont préjudiciables à la tenue mécanique des pièces ainsi constituées.
- Finalement, des variations trop progressives de section augmentent l'encombrement radial et la masse de la pièce structurale ainsi constituée.
Ces objectifs sont atteints en combinant des rayons de raccordement et des pentes de raccordement spécifiques.
La pièce structurale selon l'invention comprend des rayons de raccordement entre les zones courantes et les zones de largeur évolutive compris entre 300 mm et 1000mm. Ces: rayons de raccordement permettent de conserver une tension suffisante des nappes lors du drapage des nappes de fibres et ainsi d'éviter les ondulations et les fronces.
La pièce structurale selon l'invention comprend également des pentes de raccordement comprises entre 0,07 et 0,15. De telles pentes sont suffisamment progressives pour assurer le drainage vers l'ensemble de la pièce des sollicitations naissant à l'assemblage au niveau de l'élargissement.
Ces caractéristiques de raccordement permettent des variations de section suffisamment rapides pour ne pas accroître la masse de la pièce de manière importante et aussi permettre de confiner lesdites variations de section dans des zones qui ne dégradent pas l'habitabilité de la structure constituée à partir de telles pièces structurales. Ainsi dans le cas de l'utilisation de telles pièces structurales comme cadres d'un fuselage d'aéronef, les variations de section peuvent se situer dans les zones de hublots pour les liaisons d'éclissage entre pièces, ou sous les sièges passagers pour les liaisons entre les cadres et les traverses de plancher.
Selon l'invention la combinaison des caractéristiques géométriques de la pièce structurale, notamment dans les zones où la section évolue, des séquences d'empilement des couches de fibres et du procédé de fabrication sont telles que la déviation de l'orientation des fibres par rapport à leur orientation nominale est inférieure à 3°. Ainsi, les caractéristiques mécaniques effectives de la pièce ne diffèrent pas significativement de ses caractéristiques théoriques et la pièce peut être dimensionnée avec un coefficient de sécurité réduit. Cette caractéristique est particulièrement importante pour des applications où la masse de la pièce à résistance donnée est un facteur primordial telles que dans les applications aéronautiques.
Avantageusement, la pièce structurale objet de l'invention comprend un renforcement d'épaisseur de l'âme dans la zone d'élargissement de l'âme. Cette caractéristique permet d'améliorer la résistance au matage de l'assemblage dans cette zone.

Afin d'améliorer la tolérance aux dommages de la pièce structurale objet de l'invention, et notamment la résistance aux chocs la couche extérieure de ladite pièce cette couche extérieure sera constituée de fibres multidirectionnelles selon un angle +/- α. Cette orientation présente en effet une meilleure tolérance aux dommages que les orientations à 90° et à 0°. En effet, de telles pièces peuvent être soumises à des chocs, par exemple avec des dispositifs de manutentions à l'intérieur de la structure de coque.

De telles pièces structurales peuvent être assemblées au moyen de fixations de type rivets ou boulons afin de constituer des éléments de structure de dimension importante. Ainsi les pièces structurales correspondant à des structures de grandes dimensions peuvent être réalisées avec des moyens et des outillages de dimension moindre, en assurant ainsi une précision de fabrication ainsi qu'une limitation stricte des défauts d'orientation ou d'ondulation des fibres dans la pièce.

### DESCRIPTION DES DESSINS

La figure 1, représente une section typique d'un profilé curviligne selon l'invention.
La figure 2 montre une vue en élévation d'une telle pièce structurale.
La figure 3 indique conventionnellement les orientations de fibres par rapport au rayon de courbure et à la courbure locale.
La figure 4 présente le processus d'épanouissement d'une bande contenant des fibres orientées selon un angle de 90° par rapport à l'axe longitudinal initial
La figure 5 présente schématiquement la constitution d'un panneau raidi tel qu'utilisé pour la constitution du fuselage d'un aéronef.
La figure 6 est une vue de principe de la section courante d'un aéronef.
La figure 7 présente un exemple d'éclissage d'une traverse plancher d'aéronef avec une pièce structurale selon l'invention.
La figure 8 donne un exemple d'élargissement vers l'intérieur de la section d'une pièce structurale selon l'invention.
La figure 9 précise les détails de raccordement en termes de pentes et de rayon de raccordement d'un tel élargissement de section avec la section courante d'une pièce structurale selon l'invention.
La figure 10 est un synopsis du procédé selon l'invention.
La figure 11 représente un synopsis du procédé selon un mode de réalisation de l'invention plus particulièrement adapté à la fabrication de pèces à profil symétrique dans lequel la bande de pré-imprégnée est épanouie avant son application su l'outillage
La figure 12 présente une variante du procédé selon la figure 11
La figure 13 représente la phase finale du procédé selon la figure 12
La figure 14 représente la première étape d'un mode de réalisation du procédé selon l'invention faisant intervenir un préformage préalable de la bande de pré-imprégné
La figure 15 présente la seconde étape du mode de réalisation faisant intervenir un préformage
La figure 16 présente la troisième étape du mode de réalisation du procédé faisant intervenir un préformage avant épanouissement
La figure 17 présente l'épanouissement de la bande préformée
La figure 18 présente une étape éventuelle du procédé selon l'invention faisant intervenir le drapage de fibres à 0° .
La figure 19 présente l'intégration des moyens de cuisson à l'outillage permettant de mettre en œuvre le procédé selon l'invention
La figure 20 présente des exemples de séquence de stratification d'une pièce structurale selon l'invention.
La figure 21 présente un exemple de renforcement local de l'épaisseur d'une pièce structurale selon l'invention.
La figure 22 est une vue en coupe d'un renforcement local d'épaisseur mettant en évidence les lâchers plis destinés à obtenir une pente de raccordement apte à drainer les flux de cisaillement vers l'ensemble de la structure fibreuse d'une pièce structurale selon l'invention.

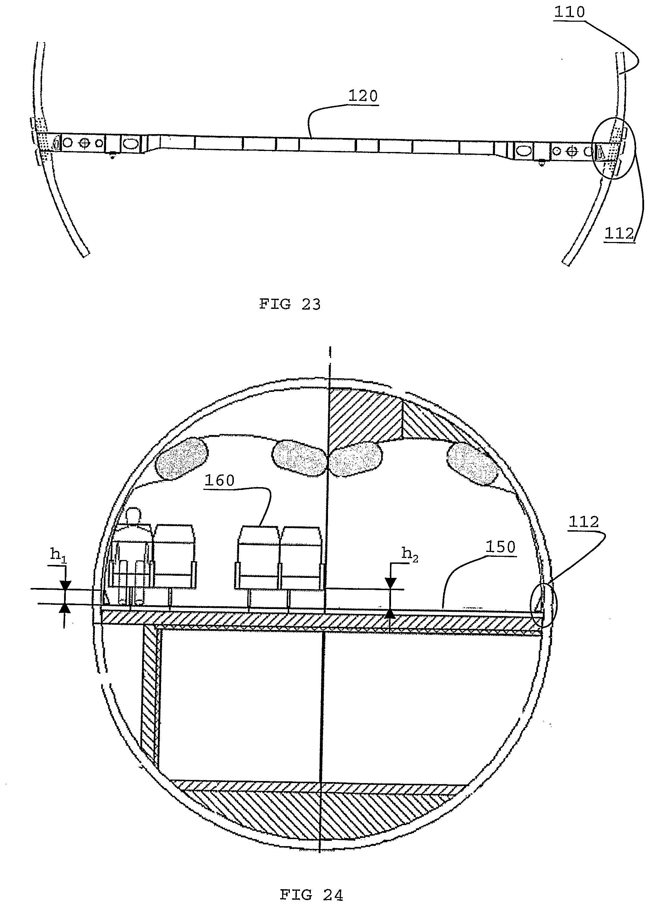

La figure 23 présente la liaison d'un cadre de fuselage comprenant une pièce structurale selon l'invention avec les traverses planchers d'un aéronef
La figure 24 présente l'influence négligeable d'un élargissement de section du cadre d'un aéronef selon l'invention sur l'habitabilité dudit fuselage.

### DESCRIPTION DETAILLEE

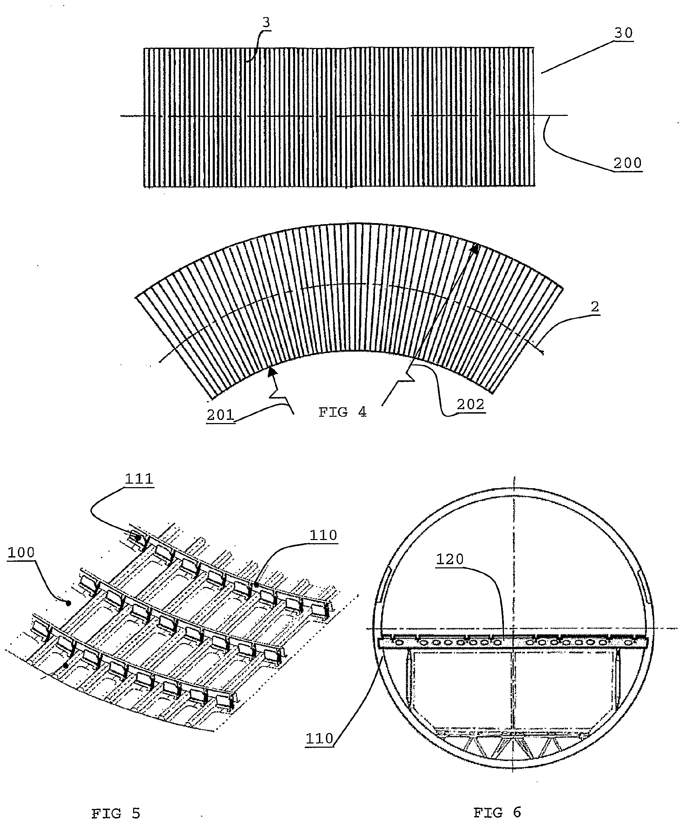

La structure d'un fuselage d'aéronef est constituée essentiellement de panneaux raidis, figure 5, comprenant un peau (100), des raidisseurs circonférentiels ou cadres (110) liés à la peau par des clips (111).
La peau et les raidisseurs longitudinaux drainent les efforts primaires liées à la flexion et la torsion du fuselage ainsi qu'à la pressurisation. Les cadres supportent la structure de fuselage l'empêchant notamment de flamber sous l'effet des chargements primaires et répartissent les efforts ponctuels, tels que le poids des passagers, dans la structure.
A cette fin les traverses soutenant le plancher (120), figure 6, sont liées aux cadres. Cette liaison est communément réalisée par un ensemble de fixations (130) de type rivet. Chacune de ces fixations est apte à transmettre une charge définie fonction, de son diamètre et de l'épaisseur des pièces ainsi assemblées. Le dimensionnement d'une telle fixation est gouverné par des critères de résistance au matage et au cisaillement. Le nombre de fixation nécessaire pour réaliser la liaison sera donc fonction de la charge à transmettre et de la résistance individuelle de chaque fixation. Par ailleurs un certain espacement doit être respecté entre les fixations. Cet espacement est tel que la section de matière résistante entre deux fixations ou entre une fixation et le bord des pièces assemblées soit suffisante en regard du chargement.
Ces contraintes conduisent à des règles d'espacement des fixations fonction de leur nature et des matériaux assemblés.
Dans le cas des matériaux composites à renfort fibreux les règles d'espacement des fixations ne permettent pas de loger l'ensemble des fixations nécessaires à la transmission de la charge dans la largeur des pièces, lorsque les dites pièces sont dimensionnées vis à vis de leur résistance aux sollicitations issues du chargement primaire.
C'est le cas notamment pour la liaison cadre-traverses plancher, ou pour certains éclissages entre pièces structurales élémentaires constituant un cadre ou encore de l'éclissages des secteurs de cadres en vis à vis, au niveau des jonctions longitudinales entre sous-ensembles de fuselage.

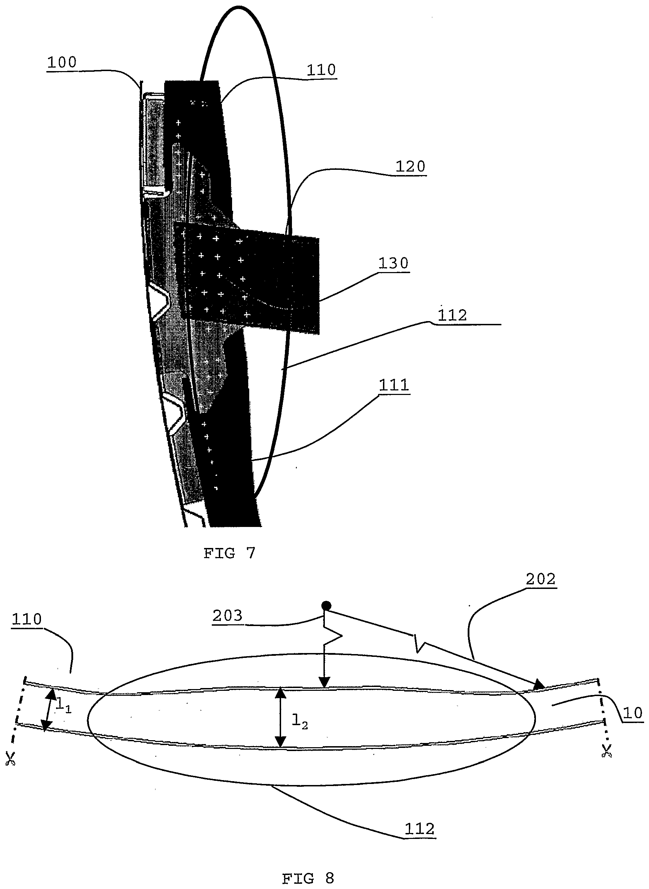

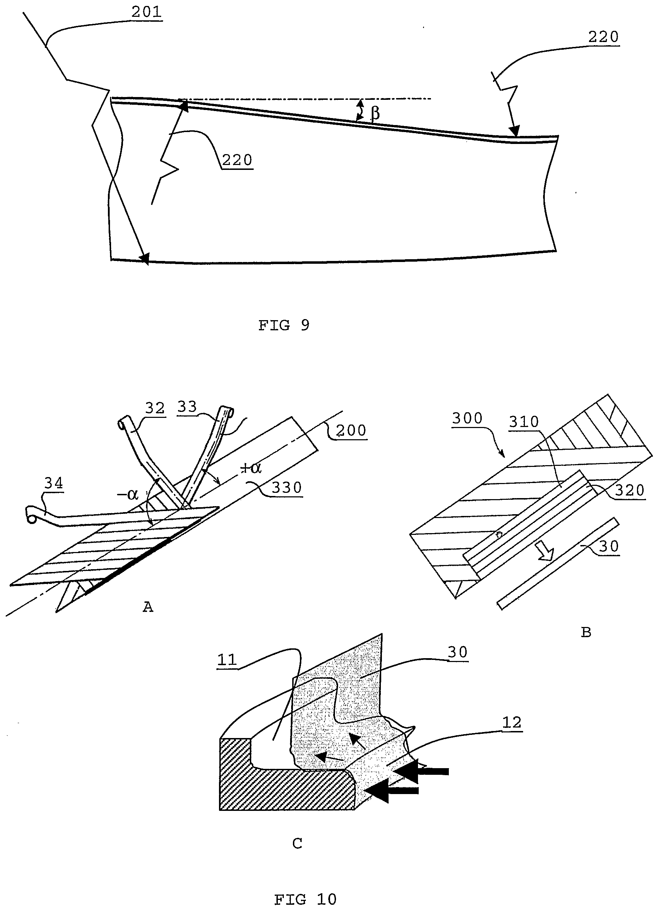

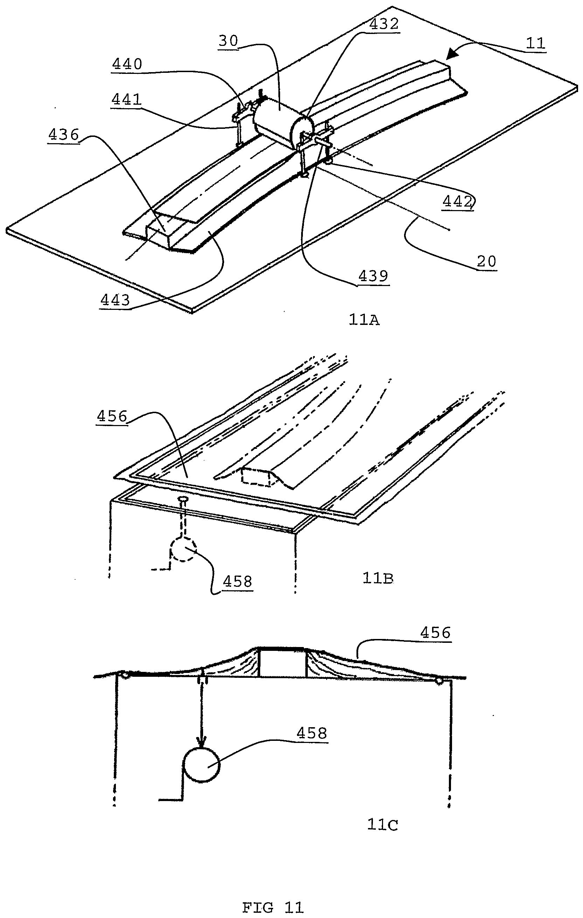

Pour résoudre ce problème technique l'invention propose, figure 7, des pièces structurales constituées d'un matériau composite à renfort fibreux sous forme de fibres continues (3), présentant localement des élargissement de section (112) parallèlement au rayon de courbure local (202,203). La partie externe d'une telle pièce structurale prend appui sur la peau (100) par l'intermédiaire des clips (111). Le rayon extérieur de cette pièce structurale correspond sensiblement au rayon de fuselage. L'élargissement de section se fait donc préférentiellement par un élargissement vers l'intérieur du fuselage, c'est à dire que le bord (203) de la section élargie (112) est d'un rayon de courbure inférieur au rayon de courbure (202) de la section courante.
La section de telles pièces peut prendre différentes formes, selon le nombre d'ailes. La forme la plus simple à 2 ailes (10,12) correspond à une forme de L. Des formes plus complexes peuvent être considérées sans sortir du domaine de l'invention. Par exemple si l'on appelle « trace » la projection du contour d'une aile dans un plan perpendiculaire à cette aile et contenant l'ensemble de son contour curviligne, l'invention s'adresse à tout type de profilé dont les traces des différentes ailes sont contenues dans au moins deux plans sécants. A titre d'exemple on peut citer les sections en forme de L, de U de W. De telles sections présentent une relative symétrie de forme (sections en U ou en W) ou une relative antisymétrie (sections en Z) par rapport à leur axe médian (2), les largeurs et épaisseurs des ailes dites symétriques ou antisymétriques pouvant néanmoins être différentes. De telles sections sont avantageuses car elles sont stables vis à vis des modes de déformation en flambage ou en déversement.
La fabrication d'une pièce structurale présentant un élargissement de section local vers l'intérieur par épanouissement d'une préforme ou de bandes de fibres multidirectionnelles pose plusieurs difficultés techniques selon les procédés de l'art antérieur. En effet s'agissant d'une réduction du rayon de courbure local, le mécanisme d'épanouissement se traduit par un resserrement des fibres dans la zone d'évolution de section. Ce resserrement peut se traduire par la création de fronces ou d'ondulations dans les fibres. L'absence de fronce peut être obtenue en maintenant une tension constante dans la bande ainsi déposée, toutefois, les procédés connus de l'art antérieur ne permettent pas de contrôler cette condition de sorte qu'une telle pièce structurale ne peut être fabriquée de manière économique et reproductible.
L'invention présente permet, par la combinaison des caractéristiques géométriques des pièces et de leur mode de fabrication, de réaliser de telles pièces de manière reproductible et économique.
Pour obtenir cette forme particulière de pièce structurale courbe et éviter la formation de fronce ou d'ondulation de fibres tout en maintenant l'orientation des fibres dans une tolérance de +/- 3° par rapport à leur orientation nominale, l'invention combine un procédé de formage et d'épanouissement permettant de conserver sous tension pendant toute l'opération de formage des bandes multidirectionnelles pré-constituées.
Selon l'invention, Figure 10A, le procédé consiste à draper une plaque (300) de fibres pré-imprégnées selon des directions +/- α et/ou 90° (32,33,34), par rapport à l'axe longitudinal de dépose (200). Les fibres ainsi drapées se présentent sous la forme de nappes unidirectionnelle préférentiellement non tissées. De telles nappes sont disponibles dans de grandes largeurs et permettent donc, en dépose à plat, des taux de dépose très élevés. De telles plaques sont drapées sur un support (330) qui peut être du papier ou avantageusement une matière suffisamment élastique pour ne pas entraver l'épanouissement des bandes lors des opérations de dépose. A titre d'exemple il peut s'agir d'une bande de polyéthylène ou de silicone.
Des bandes (30) de largeur (320) et de longueur(310) appropriées, figure 10B, sont découpées dans cette plaque par tout moyen connu de l'homme du métier tel que lame vibrante, jet d'eau, laser etc ... Avantageusement ces bandes sont de largeur uniforme sur toute leur longueur. Typiquement, la largeur de la bande (30) est égale à la largeur développée maximale de la pièce structurale à fabriquer.
Selon un premier mode de réalisation adapté à la fabrication de pièces de sections symétriques telles que des sections en U ou en W. La bande est enroulée sur un cylindre (432) d'axe perpendiculaire à l'axe de ladite bande. Alternativement la bande peut être enroulée sur un cône.
-Selon une première variante, figure 11A, la bande est ensuite déroulée et pressée sur la face supérieure de l'outillage mâle de manière à réaliser l'épanouissement.
A cette fin le dispositif de dépose, figure 11A, comporte des moyens de dépose et de tension progressive de la bande. Le cylindre (432) est supporté par l'intermédiaire de son axe (439) sur des moyens de support (440) pilotés en translation selon la normale à la face d'application (436) de la bande sur l'outillage. Les moyens de guidage (441) des moyens de support (440) sont montés sur des roues (442) qui suivent une piste ou un gabarit (443) aptes à leur faire décrire une trajectoire correspondant à la courbure de l'outillage. Des moyens motorisés permettent de presser la bande sur la face supérieure de l'outillage par l'intermédiaire du cylindre (432). Ces moyens permettent de compenser la variation de diamètre de celui-ci correspondant à l'épaisseur déposée. Le déplacement selon l'axe longitudinal curviligne et piloté de sorte à conserver la bande sous tension durant toute la dépose. La bande déjà déposée est maintenue sur la face supérieure de l'outillage par sa propre pégosité. Au besoin il est possible de d'ajouter des moyens de bridage permettant de l'immobiliser sur cette face au fur et à mesure de la dépose.
Les actions combinées de la pression, de la tension et de la trajectoire du rouleau de dépose permettent de réaliser l'épanouissement des bandes ainsi déposées sur la face supérieure de l'outillage. L'opération est renouvelée avec des bandes d'orientations différentes de manière à réaliser l'empilage désiré.
L'ensemble est alors recouvert d'une vessie (456), figure 11B, de manière à former une cavité étanche. En tirant cette cavité au vide par l'intermédiaire d'une pompe (458) l'action de la vessie va progressivement plaquer les bords de la bande sur l'outillage en la maintenant sous tension.

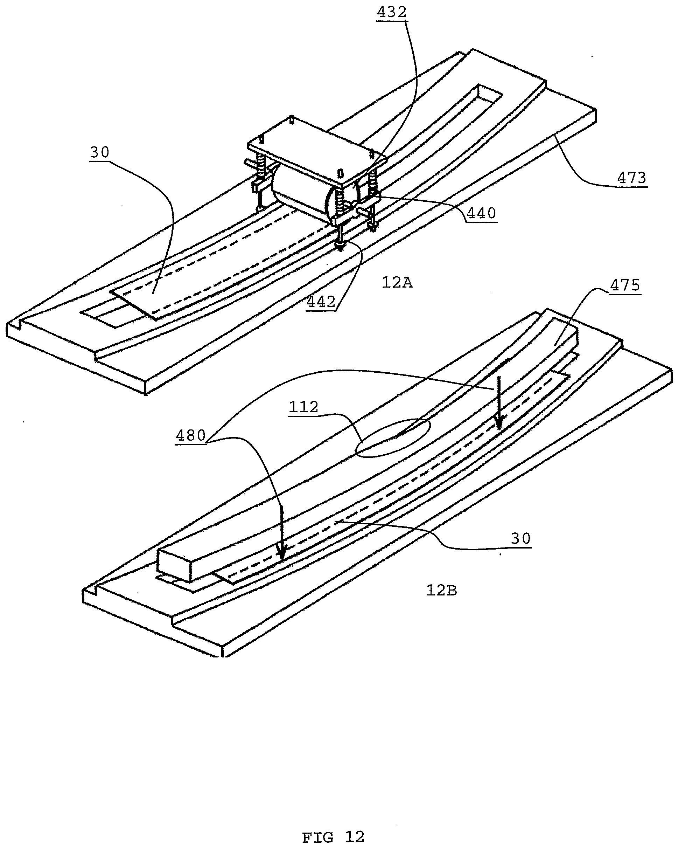

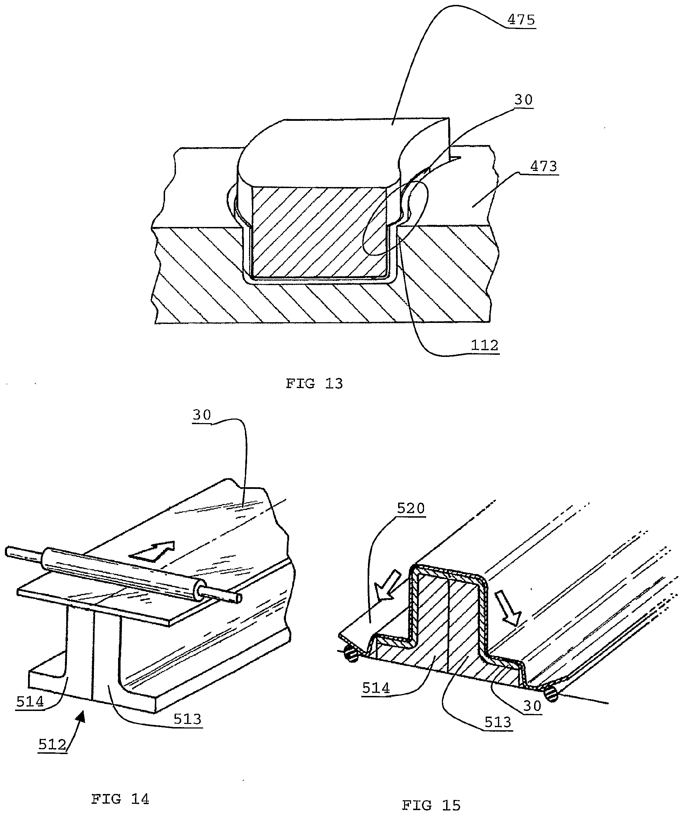

Selon une autre variante, figure 12A, la bande est d'abord épanouie sur la surface d'une matrice (473). La bande est ensuite emboutie par l'outillage (475), figure 12B, les bords de la bande étant maintenus par des moyens de serre flanc à glissement contrôlé, symbolisés par leur action (480) figure 12B, qui permettent de conserver la bande sous tension durant cette phase d'emboutissage. On évite ainsi la formation de fronces ou d'ondulations.
Ce mode de réalisation permet la fabrication de pièces courbes à profil sensiblement symétrique tel que des U, présentant des variations locales de rayon de courbure, dès lors que ces variations sont progressives par l'intermédiaire de pentes et /ou de rayons de raccordement, figures 12B et 13.
Selon un second mode de réalisation plus particulièrement adapté à la fabrication de sections antisymétriques tels que des sections en Z, l'épanouissement est réalisé simultanément à l'application de la bande sur l'outillage, cette opération a lieu avantageusement alors que le profil est déjà mis en forme.
Selon ce mode de réalisation la bande (30) est d'abord appliquée sur la face supérieure d'un outillage de préformage (512) rectiligne, figure 14. Ledit outillage de préformage est constitué de deux profils antisymétriques (513, 514) accolés afin de former un moule mâle de profil symétrique.
Ces deux profils de préformage sont constitués d'une matière élastique, par exemple du silicone.

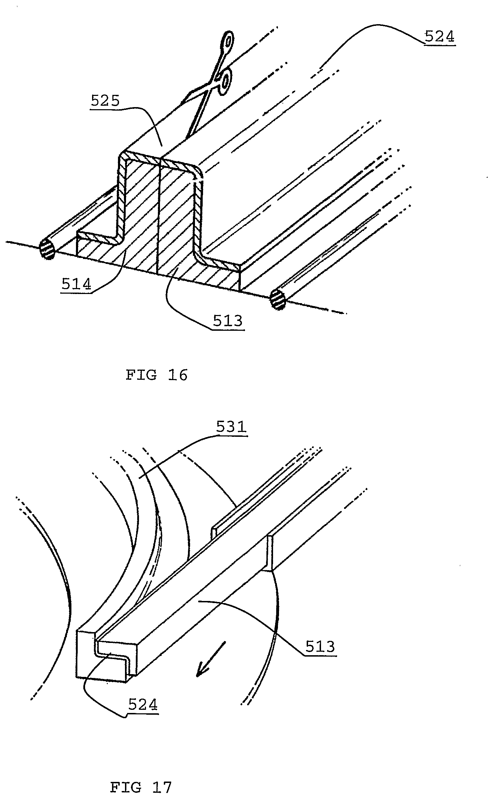

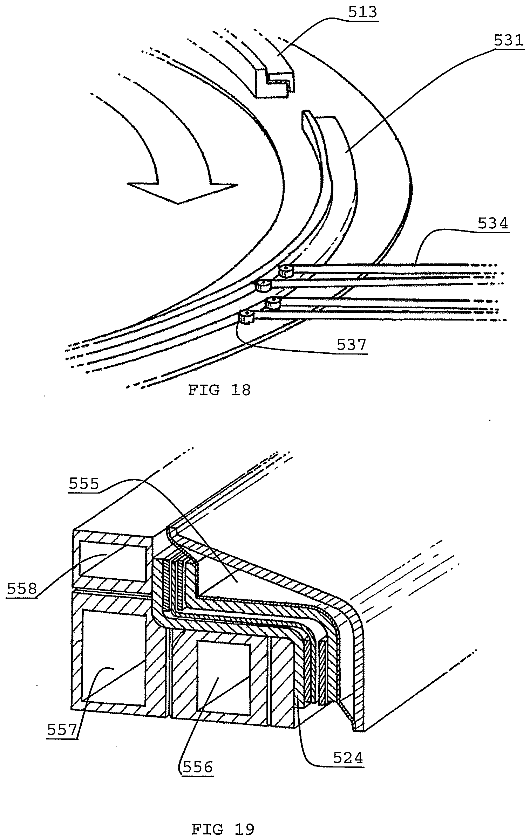

Si la pièces finale comprend des élargissement locaux de la section le profil de préformage présentera les mêmes élargissements.
Comme selon le mode de réalisation précédent les flans de la bande ainsi appliquée sont rabattus sur le profil par l'intermédiaire d'une vessie (520) plaquée sur le profil par tirage au vide, figure 15.
La préforme ainsi obtenue est découpée en deux préformes (524,525), formant deux profils antisymétriques, figure 16.
La bande ainsi formée (524) est appliquée sur l'outillage (531) par l'intermédiaire du profil de préformage (513), figure 17. Un tel outillage peut comporter des élargissements de section localisés (550), figure 18. L'ensemble bande et outillage de préformage est plaqué sur l'outillage (524) par tout moyen approprié tel qu'un ensemble de rouleaux répartis sur la circonférence. Cette application progressive permet de conserver l'ensemble des fibres sous tension et ainsi éviter la formation d'ondulations ou de fronces dans les fibres. Lorsque la section évolue et que le rayon de courbure local (202) de l'aile intérieure (12) diminue, la conservation de cette tension est grandement facilitée par les pentes (β) et/ou les rayons de raccordement (220) dans les zones de section évolutive (112).

Après réalisation de la préforme par l'un ou l'autre des modes de réalisation la pièce est cuite sous pression directement sur l'outillage se sorte à lui conférer ses caractéristiques mécaniques figure 19. A cette fin l'outillage comporte des moyens de chauffage, par exemple par circulation d'huile chaude à l'intérieur de celui-ci dans des canaux (556,557,558). L'outillage comporte également des moyens de mise sous pression (555) qui peuvent venir s'appliquer sur la pièce (524), par exemple, par l'intermédiaire d'un robot au cours de la cuisson. Les moyens de chauffage peuvent avantageusement être utilisés au cours de l'application de la bande sur l'outillage de manière à réduire la viscosité de la résine et ainsi favoriser le glissement relatif des fibres ce qui facilite l'épanouissement de la bande. Typiquement, avec une résine epoxy, une température de 60°C est adéquate pour obtenir ce glissement.
Le raccordement entre les parties courantes et les élargissements de rayon doit être tel qu'il n'engendre pas d'ondulation de fibres et que lesdites fibres puissent être maintenues dans une certaine tolérance par rapport à leur orientation nominale. Typiquement pour des applications aéronautiques, cette tolérance d'orientation est de +/- 3°.
Pour des pièces de structure telles que des cadres dont la largeur est nettement inférieure au rayon de courbure, soit inférieure à 5% du rayon de courbure, la progressivité du raccordement est fonction du ratio d'élargissement défini comme suit :
si la largeur de la section nominale est l₁ et la largeur de la section élargie l₂, alors le ration d'élargissement est défini par la quantité (l₂-l₁)/R où R est le rayon de courbure maximum de la pièce au niveau de l'élargissement (201 figure 9).La combinaison des caractéristiques géométriques de la pièce et du procédé selon l'invention permettent d'atteindre des ratios d'élargissement jusqu'à 2% sans ondulation des fibres et sans désorientation supérieure à 3° de celles-ci. Des ratios d'élargissement compris entre 1% et 2% sont suffisants pour répondre à tous les besoins d'éclissage tels qu'ils sont rencontrés sur un fuselage d'aéronef, tout en permettant des taux de productivité élevés dans des conditions industrielles.

Figure 18, des bandes unidirectionnelles (534) orientées à 0°, peuvent être déposées préalablement à la dépose d'une bande multidirectionnelle. De telles bandes peuvent être déposées par des techniques de drapage classiques sur les ailes qui ne présentent pas ou peu de variation de rayon de courbure sur leur largeur, ou, peuvent être déposées par des techniques de placement de fibres sur les ailes, telles que l'âme (10), qui présentent une variation de rayon de courbure dans leur largeur. De telles déposes de fibres unidirectionnelles à 0° ou à 90° peuvent également être effectuées entre la dépose de deux bandes multidirectionnelles.

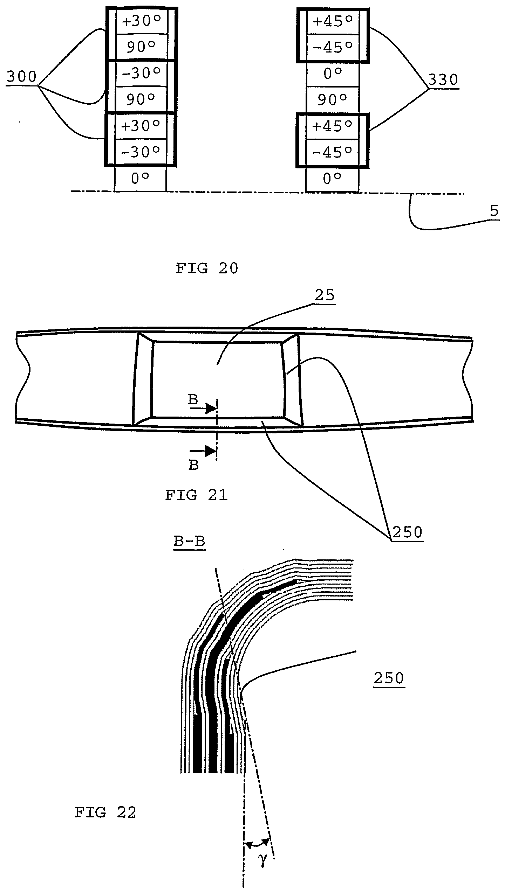

La figure 20 donne des exemples de séquences de stratification de sections selon l'invention. Les orientations de fibres correspondantes sont équilibrées et symétriques par rapport à l'axe neutre (5) de la section du profilé. Selon l'invention plusieurs modes de réalisation sont possibles, mettant en œuvre des bandes multidirectionnelles (300) comprenant des orientations de fibres +/- α ou des orientations de fibres 90° et -α, suivies de la dépose d'une comprenant des orientations 90° et + α.
Afin d'améliorer encore la résistance au matage des zone d'éclissage, il est possible d'augmenter localement l'épaisseur de la zone en drapant et en épanouissant des plis supplémentaire de manière à créer un renfort (figure 21). Afin de répartir les flux d'effort appliqués à ce renfort et notamment drainer les sollicitations de cisaillement vers l'ensemble de l'épaisseur du stratifié, un tel renfort doit être relié à la structure courante de la pièce par des pentes(250) d'angle γ. Ces pentes sont obtenues par des lâchers de plis, figure 22, de sorte à obtenir une évolution progressive de l'épaisseur. Typiquement, un angle γ de 5° , soit une pente de 0,2, permet de drainer les flux de cisaillement vers la structure fibreuse et ainsi d'éviter le délaminage d'un tel renfort.

## Revendications

1. Pièce structurale courbe constituée d'un matériau composite à renfort fibreux à fibres continues (3) dont la section comprend au moins deux ailes (10,12), les dites fibres se prolongeant d'une aile à l'autre, au moins l'une des ailes présentant une variation de rayon de courbure sur sa largeur, ladite variation étant comprise entre deux rayons de courbure dont la concavité est orientée dans la même direction, ladite aile comprenant une variation de la largeur de sa section (112) parallèlement au rayon de courbure local ladite variation de largeur se traduisant par une réduction de rayon de courbure minimal (203) de la pièce et augmentation de la longueur des fibres comprise dans ladite aile, **caractérisé en ce que**
la variation de largeur (112) comprend un élargissement suivi d'un retour à la section courante.

2. Pièce structurale courbe selon la revendication 1 **caractérisé en ce qu'**elle comprend des fibres de renfort continues se prolongeant sur les au moins deux ailes orientées selon une direction nominale + ou - α (33, 34) par rapport à la courbure, α étant compris en 30° et 60°.

3. Pièce structurale selon la revendication 2 **caractérisée en ce qu'**elle comprend des fibres de renfort continues, dites à 90° (32), se prolongeant sur au moins deux ailes orientées parallèlement au rayon de courbure local.

4. Pièce structurale selon la revendication 2 **caractérisé en ce qu'**elle comprend des fibres de renfort continues, dites à 0° (31), orientées perpendiculairement au rayon de courbure dans au moins une des ailes.

5. Pièce structurale selon l'une des revendications précédentes, **caractérisée en ce qu'**elle comprend des rayons de raccordement (220) compris entre 300mm et 1000mm entre les parties courantes et les parties de section évolutive.

6. Pièce structurale courbe selon la revendication 5 **caractérisée en ce que** la variation de section (112) se fait progressivement selon une pente β comprise entre 0,07 et 0,15.

7. Pièce structurale courbe selon la revendication 1 **caractérisée en ce qu'**elle comporte un renforcement d'épaisseur d'au moins une des deux ailes dans la zone d'élargissement de celle-ci (112).

## Patentansprüche

1. Gekrümmtes Strukturteil, das aus einem Verbundwerkstoff mit Faserverstärkung aus kontinuierlichen Fasern (3) besteht, dessen Querschnitt mindestens zwei Schenkel (10, 12) umfasst, wobei sich die Fasern von einem Schenkel zum anderen fortsetzen, wobei mindestens einer der Schenkel eine Krümmungsradiusänderung über seine Breite aufweist, wobei die Änderung zwischen zwei Krümmungsradien enthalten ist, deren Konkavität in die gleiche Richtung ausgerichtet ist, wobei der Schenkel eine Änderung der Breite seines Querschnitts (112) parallel zum lokalen Krümmungsradius umfasst, wobei sich die Breitenänderung in einer Mindestkrümmungsradiusreduzierung (203) des Teils und Zunahme der Länge der in diesem Schenkel enthaltenen Fasern äußert, **dadurch gekennzeichnet, dass** die Breitenänderung (112) eine Verbreiterung mit anschließender Rückkehr zum laufenden Querschnitt umfasst.

2. Gekrümmtes Strukturteil nach Anspruch 1, **dadurch gekennzeichnet, dass** es sich über die mindestens zwei Schenkel fortsetzende kontinuierliche Verstärkungsfasern umfasst, die entlang einer Nennrichtung + oder - α (33, 34) in Bezug auf die Krümmung ausgerichtet sind, wobei α zwischen 30° und 60° beträgt.

3. Strukturteil nach Anspruch 2, **dadurch gekennzeichnet, dass** es parallel zum lokalen Krümmungsradius ausgerichtete sogenannte kontinuierliche 90°-Verstärkungsfasern (32) umfasst, die sich über mindestens zwei Schenkel fortsetzen.

4. Strukturteil nach Anspruch 2, **dadurch gekennzeichnet, dass** es senkrecht zum Krümmungsradius ausgerichtete sogenannte kontinuierliche 0°-Verstärkungsfasern (31) in mindestens einem der Schenkel umfasst.

5. Strukturteil nach einem der vorhergehenden Ansprüche, **dadurch gekennzeichnet, dass** es Übergangsradien (220) zwischen 300 mm und 1000 mm zwischen den laufenden Teilen und den Teilen mit evolutivem Querschnitt umfasst.

6. Gekrümmtes Strukturteil nach Anspruch 5, **dadurch gekennzeichnet, dass** die Querschnittsänderung (112) stufenlos gemäß einer Neigung β zwischen 0,07 und 0,15 erfolgt.

7. Gekrümmtes Strukturteil nach Anspruch 1, **dadurch gekennzeichnet, dass** es eine Dickenverstärkung mindestens eines der beiden Schenkel in dessen Verbreiterungsbereich (112) beinhaltet.

## Claims

1. Curved structural component made of a fibre-reinforced composite material having continuous fibres (3), the cross section of which comprises at least two wings (10, 12), said fibres extending from one wing to the other, at least one of the wings having a variation in radius of curvature across its width, said variation being comprised between two radii of curvature of which the concavity is oriented in the same direction, said wing comprising a variation in the width of its cross section (112) parallel to the local radius of curvature, said variation in width manifesting as a reduction in minimum radius of curvature (203) of the component and an increase in the length of the fibres comprised in said wing, **characterized in that** the variation in width (112) encompasses a widening followed by a return to the main cross section.

2. Curved structural component according to Claim 1, **characterized in that** it comprises continuous reinforcing fibres extending over the at least two wings that are oriented in a nominal direction + or - α (33, 34) with respect to the curvature, α being between 30° and 60°.

3. Structural component according to Claim 2, **characterized in that** it comprises continuous reinforcing fibres, known as 90° fibres (32), extending over at least two wings that are oriented parallel to the local radius of curvature.

4. Structural component according to Claim 2, **characterized in that** it comprises continuous reinforcing fibres, known as 0° fibres (31), that are oriented perpendicularly to the radius of curvature in at least one of the wings.

5. Structural component according to one of the preceding claims, **characterized in that** it comprises connecting radii (220) of between 300 mm and 1000 mm between the main parts and the parts of varying cross section.

6. Curved structural component according to Claim 5, **characterized in that** the variation in cross section (112) is gradual along a gradient β of between 0.07 and 0.15.

7. Curved structural component according to Claim 1, **characterized in that** it has a thickness reinforcement of at least one of the two wings in the widening zone thereof (112).
